(19) Europäisches Patentamt
European Patent Office
Office européen des brevets

(11) Publication number: **0 177 111**
**B1**

(12) # EUROPEAN PATENT SPECIFICATION

(45) Date of publication of patent specification: **27.09.89**

(21) Application number: **85302390.1**

(22) Date of filing: **04.04.85**

(51) Int. Cl.[4]: **D 06 P 1/52,** D 06 P 1/613, D 06 P 1/62, D 06 P 5/00, B 41 M 1/30, B 41 M 1/36, C 09 D 11/00 // D06L3/12, D06M13/00, D06M15/00

(54) **Method of treating textiles.**

(30) Priority: **01.10.84 JP 204103/84**

(43) Date of publication of application:
**09.04.86 Bulletin 86/15**

(45) Publication of the grant of the patent:
**27.09.89 Bulletin 89/39**

(84) Designated Contracting States:
**AT BE CH DE FR GB IT LI LU NL SE**

(56) References cited:
**DE-A-3 344 648**
**DE-B-1 571 870**
**DE-B-2 758 881**
**US-A-4 330 293**

(73) Proprietor: **TORAY INDUSTRIES, INC.**
**2, Nihonbashi-Muromachi 2-chome Chuo-ku**
**Tokyo 103 (JP)**

(72) Inventor: **Handa, Nobuyoshi**
**A3-34, 10, Sonoyama 2-chome**
**Otsu-shi Shiga-ken (JP)**
Inventor: **Masuda, Yutaka**
**B1-21, 10, Sonoyama, 2-chome**
**Otsu-shi Shiga-ken (JP)**
Inventor: **Nakamura, Teruo**
**3-6, Nangohcho, 5-chome**
**Otsu-shi Shiga-ken (JP)**

(74) Representative: **Ritter, Stephen David et al**
**Mathys & Squire 10 Fleet Street**
**London EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 177 111 B1

Courier Press, Leamington Spa, England.

## Description

The present invention relates to a method of applying a treating agent such as a coloring solution to fabrics and a composition used for same. Particularly, it is concerned with a dyeing process for obtaining bleeding-prevented sharp and clear print patterns on fabrics by the ink jet or spray method.

Screen printing, roller printing, rotary printing and transfer printing methods have heretofore been adopted generally as textile printing methods. However, all of these conventional textile printing methods require a plate-making process and much labor and preparation period before goods production. Besides, notwithstanding today's situation of diversified fashions and desire for multi-variety, small lot production, the above conventional textile printing methods are markedly lacking in instant printing capability. To remedy this inconvenience, developments are now under way in the field of recording or printing on paper. Above all, an ink jet recording process capable of printing without using plates is beginning to attract attention. When this process, mainly using paper, is applied to textiles, there occurs the problem of bleeding as a major problem. Textiles are not so water-absorbabale as paper and have directionality and voids, so ink bleeding occurs to a large extent, making it difficult to obtain clear patterns.

To prevent such bleeding in fabrics, British Patent No. 1,587,930 proposes a method in which natural carbohydrates (e.g. flour or starch derivative, alginate) are mixed in ink components, and fabric is pretreated with a coagulating agent (e.g. aluminum sulfate, sodium borate, borax).

Further, in U.S. Patent No. 4,330,293 there is proposed a method in which a synthetic polymer containing carboxylic acid is mixed into ink and fabric is pretreated with an alkali compound.

However, according to the present inventors' study, the above methods involve the following drawbacks.

(1) For thin fabrics, aside from thick fabrics such as carpets, bleeding cannot be prevented to a satisfactory extent.

(2) Although it is preferable that the ink viscosity be low in a high speed ink jet, it is impossible to obtain a satisfactory effect because only small amounts of natural carbohydrate and polycarboxylic acid can be incorporated in ink components from the standpoint of injection characteristic.

(3) The above known compounds cannot be used because they exhibit a coagulating action against a water dispersion type ink such as a disperse dyestuff. Also against water-soluble dyestuffs, those compounds are apt to form gels.

(4) The pretreatment with an alkali compound causes a change in quality or decrease of tenacity of natural fibers such as wool and silk as well as synthetic fibers such as acrylic fibers.

Further, in Japanese Patent Laid Open No. 106989/1984 there is proposed a method in which a recording medium is pretreated with a metallic salt and a cationic substance and then an ink which comprises a water-soluble dyestuff is applied thereto to improve the resistance to water and to light. However, this proposed ink jet method is applied to paper, and if it is applied to fabric, a hydrophilic group ($—SO_3Na$) of the water-soluble dyestuff will be substituted by a metal, e.g. Ca, into $[(—SO_3)_2Ca]$, resulting in deterioration of the water solubility, decrease of functional groups substantially bonded to the fabric and a marked reduction of dyeing affinity.

## SUMMARY OF THE INVENTION

The present invention resides in a fabric treating method for applying a treating agent to selected areas of a fabric, the treating agent being applied in the form of a treating solution containing the treating agent and water, characterised in that the treating solution additionally contains at least one water-soluble or water-dispersible hydrophilic material (A) having a hydrophilic group represented by the formula $—OSO_3M$ or $—SO_3M$, M being a monovalent metal, ammonium or amine group, the fabric having been pretreated with a material (B) for coagulating the material (A).

According to the present invention, for example in the case of an ink jet process, there can be obtained sharp and clear print patterns prevented from bleeding without deterioration of dyeing property, in good ink injection characteristic for all kinds of fabrics, including thin fabrics.

## DETAILED DESCRIPTION OF THE PREFERRED EMBODIMENT

The effect of the present invention resides in that even if a treating solution of low viscosity which bleeds easily is used, it is possible to prevent its bleeding effectively. The treating method which permits such effect of the present invention to be exhibited easily is an ink jet or spray process in which a treating solution is applied to a fabric in the form of droplets. Typical treating solution to which is applied the method of the present invention is a coloring solution. But, the application of the present invention is not limited thereto; the method of the invention is also applicable to treating solutions for imparting colorless functional chemicals (e.g. fluorescent whitening agent, reactant, adhesive).

The present invention will be described below in more detail mainly about dyeing using droplets such as an ink jet dyeing.

The ink jet process is a printing process in which non-contact recording and printing are effected by controlling, using a computer, the ink which is injected from a nozzle of 30 to 500 µ. It is applied to dyeing for forming patterns on substrates such as fabrics. The ink jet process includes a number of devised processes, which are classified into three major processes according to how to produce ink droplets. The

present invention is applicable to any process, including those just mentioned. The first process is a pressure pulse type process (on demand type) in which ink droplets are ejected on demand from an orifice by the action of a piezoelectric element alone. The second process is a pressure vibration type process in which pressurized ink is injected as a jet from a fine hole and controlled by applying electrical charge while splitting it into fine droplets by vibration. The third process is an electrostatic acceleration type process in which ink is drawn from a nozzle by an electrostatic attraction, unlike the second process in which pressurized ink is injected from a fine hole. Also to bubble jet and slit jet processes, the present invention is applicable.

Where the present invention is applied to the spray process, the spray process may be any of one-fluid type, two-fluid type and electrostatic spray type.

The ink jet process and the spray process are applicable to both printing and solid dyeing. The ink jet process which is easier to attain uniformness of droplets, is most preferable.

It is the key point of the present invention to prevent bleeding by coagulating ink on a substrate. To this end, it is necessary to prepare an ink composition wich contains a specific coagulatable compound, and pretreat a substrate with a specific coagulant to cause the coagulation. The specific coagulatable compound referred to herein is a water-soluble or water-dispersible compound having $—SO_3M$ group.

The coagulation referred to herein means that a low viscosity ink is rendered high in viscosity and/or traps therein a treating agent such as dyestuff under the action of coagulation or gelation induced by ion reaction and is thereby coagulated to prevent bleeding.

The water-soluble or water-dispersible compound having $—OSO_3M$ or $—SO_3M$ group used in the present invention is a compound capable of being coagulated while trapping therein a functional chemical or treating agent such as a coloring agent in an insant with a coagulating agent which has been applied through pretreatment to a material to be treated. Two typical examples may be mentioned, one being water-soluble or water-dispersible polymers having $—SO_3M$ group or $—SO_3M$ group and the other being compounds having $—OSO_3M$ group or $—SO_3M$ group and ranging in molecular weight from 350 to less than 2,000. The second compounds are effective as a material having a dispersing function, for example as a dispersing agent, for dispersing in water substantially water-insoluble chemicals such as a coloring agent. The other materials than the above dispersing polymers and dispersant are not found to have the function of coagulating while trapping therein a treating agent.

As the first water-soluble or water-dispersible polymers having $—SO_3M$ group are preferred those ranging in molecular weight from 2,000 to 100,000. Those having a molecular weight less than 2,000 are weak in coagulating power except the second dispersant, and those having a molecular weight larger than 100,000 involve problems that ink becomes unstable due to coagulation and the injection characteristic of ink is deteriorated by thickening action. Therefore, a specially preferred range of molecular weight is from 3,000 to 40,000. Examples of such polymers include polyester resins or polyamide resins copolymerized with sulfoisophthalic acid, etc., or polyacrylic resins copolymerized with a vinyl monomer having sulfonic acid group. In these polymers, the resins per se have a water soluble or water-dispersible hydrophilic property. Particularly, polyester resins are preferred in such aspects as adhesion, stability in the presence of dyestuff, gelating ability and touch. Above all, water-dispersible polyester resins do not impair the injection characteristic of ink because they do not cause an increase of viscosity even when incorporated in ink, and thus are preferable.

Water-soluble or water-dispersible polyester resins are prepared using dicarboxylic acids such as terephthalic acid and isophthalic acid as acid component, diols such as ethylene glycol and butylene glycol as alcohol component, and bifunctional monomers having $—SO_3M$ group as a third component. The bifunctional monomer component can be dicarboxylic acid (or its derivatives) having $—SO_3M$ group or diol having $—SO_3M$ group. Particularly preferred bifunctional monomers are sodium salts of sulfoisophthalic acid, sulfoterephthalic acid, sulfophthalic acid and 4-sulfonaphthalene-2,7-dicarboxylic acid. Very suitable monomers are 5-sodiosulfoisophthalic acid and its derivatives, e.g. sodiosulfodimethylisophthalate.

Where bifunctional monomer component having $—SO_3M$ group is an acid or a derivative thereof, polyester must contain at least about 6 mol% based on the total acid content of monomer, and where the bifunctional monomer component is a diol, polyester must contain at least 6 mol% based on the total diol content of monomer. The production of such polyesters is well known as disclosed, for example, in Japanese Patent Publication No. 40873/1972 (corresponding to U.S. Patent No. 3,546,008).

Also as to polyamides, water-soluble copolyamides can be obtained by the copolymerization of monomers such as 5-sodium sulfoisophthalic acid.

The quantity of $—SO_3M$ group in the water-soluble or water-dispersible polymer used in the invention is not specially limited, but it is at least a quantity required for imparting water-solubility or water-dispersibility to the polymer. If the quantity of $—SO_3M$ group is excess, it bcomes difficult to effect the coagulation with a coagulating agent. According to a generally preferred range, the polymer contains 150 to 1,500 millimol equivalent of $—SO_3M$ groups per kilogram thereof.

Another typical water-soluble or water-dispersible material which may be used in the present invention is a dispersant having $—OSO_3M$ group or $—SO_3M$ group. Preferably, this material is used when the treating agent such as a coloring agent is substantially water-insoluble and must be dispersed using a dispersing agent. As the dispersing agent, it is necessary to use one capable of dispersing the treating agent effectively and being easily coagulated with the coagulating material. Where the treating agent is a

water-insoluble dye or pigment, it is preferable to use such dispersing agents as sulfates or sulfonates having not less than three aromatic rings as hydrophobic groups per $—OSO_3M$ group or $—SO_3M$ group as a hydrophilic group. The aromatic ring referred to herein indicates benzene ring or naphthalene ring. One naphthalene ring is counted as two aromatic rings.

Typical examples of such dispersing agent are those represented by the following general formula:

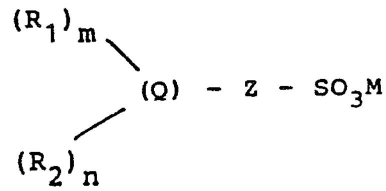

where,

Q: benzene ring or naphthalene ring
$R_1$: aromatic ring-containing group, e.g. arylalkyl
m: integer of 2 to 5
$R_2$: non-aromatic group, e.g. lower alkyl, halogen
n: integer of 0 to 3
Z: divalent alkylene ether or a derivative thereof
M: ammonia, amine, monovalent metal

Particularly, those represented by the following general formula are preferred:

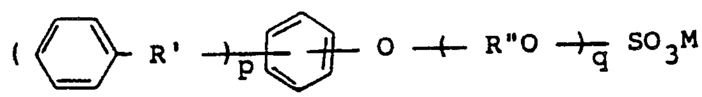

wherein

R′ an alkylene group having 1 to 2 carbon atoms,
R″ is an alkylene group having 2 or 3 carbon atoms,
p is an integer of 2 or 3 and
q is an integer of 2 to 30.

The following are mentioned as typical examples of dispersants represented by the above general formulae:

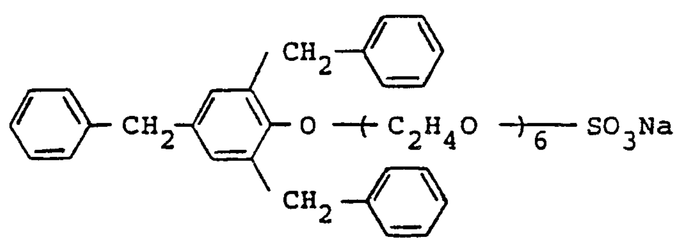

(1)

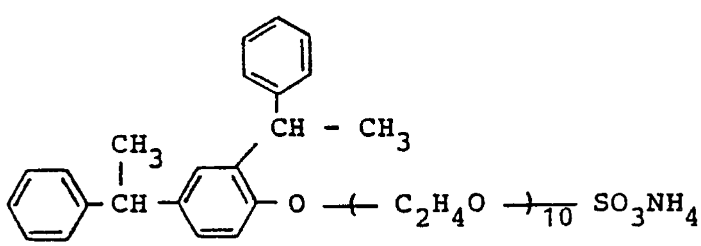

(2)

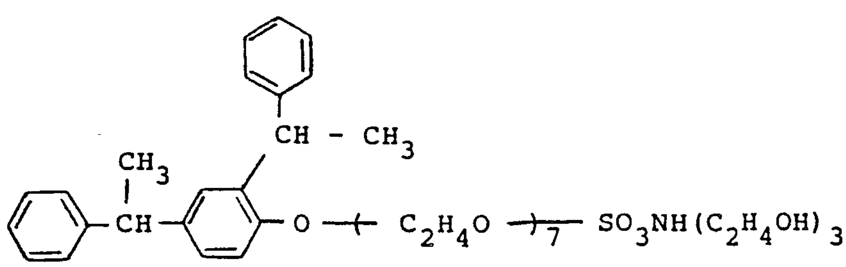

(3)

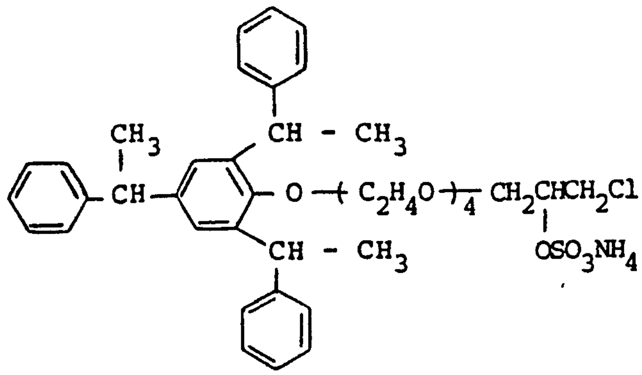

(4)

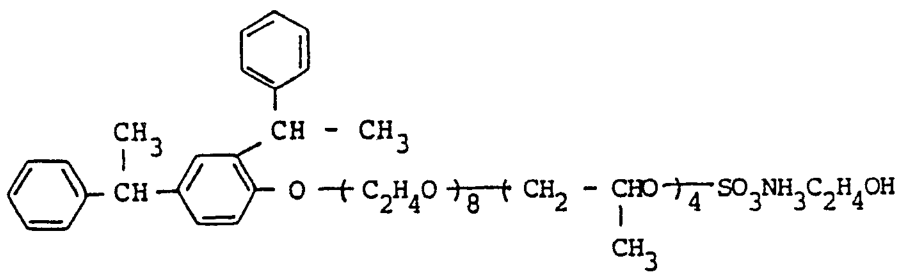

(5)

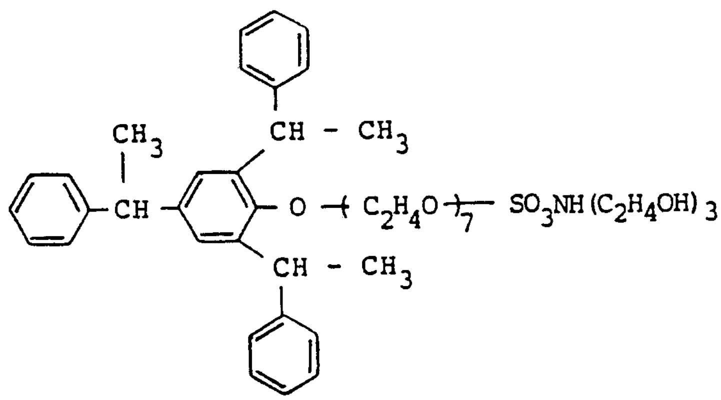

(6)

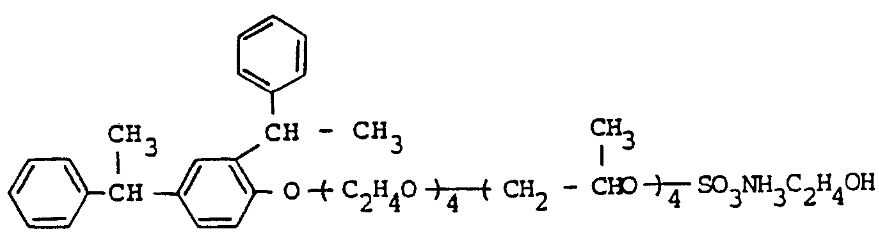

(7)

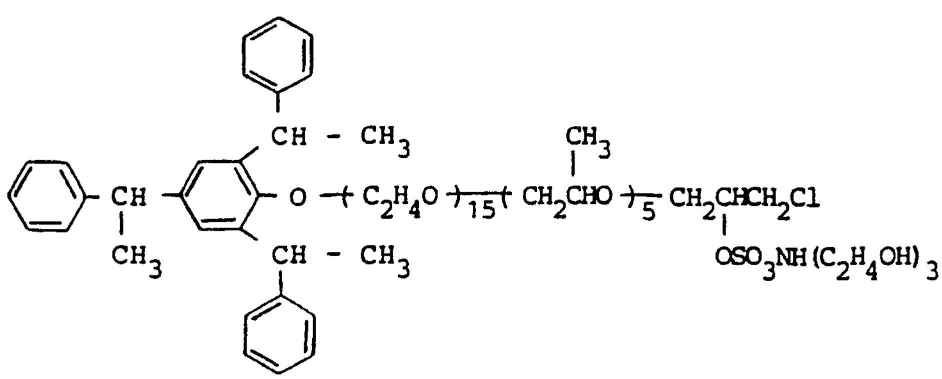

(8)

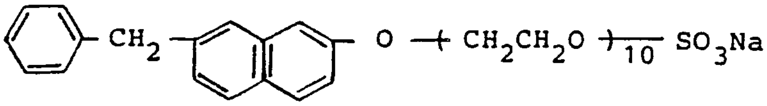 (9)

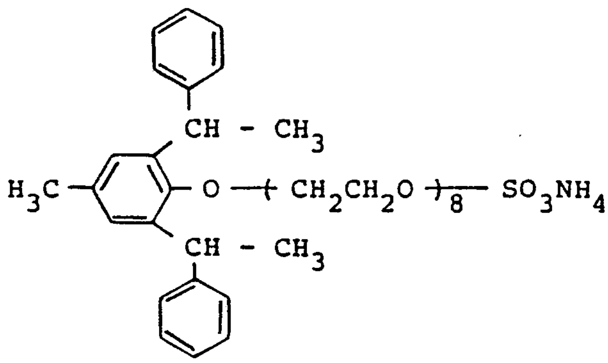 (10)

The M in the $-SO_3M$ group referred to herein means a monovalent cation, examples of which include Na, K, Li, $NH_4$ and amines such as monoethanolamine and triethanolamine.

The material containing $-OSO_3M$ or $-SO_3M$ group may be used alone or in combination.

As to the material (B) for coagulating $-SO_3M$ or $-SO_3M$ group-containing material (A) used in the present invention, preferred examples are water-soluble inorganic metal salts, organocarboxylic acid metal salts, polyamines, amine salts and polyammonium salts, in which metals are mono- or polyvalent metals, preferably Na, K, Zn, Mg, Ca, Ba and Al. Preferred salts are halides, nitrates and acetates. Among these, preferred metals which exhibit a high coagulating property are Ba, Ca and K, and halides, especially chlorides, thereof are preferred.

Organic nitrogen-containing cationic compounds such as polyamines are also employable as the coagulating material.

As examples of such compounds are mentioned various amine salts, quaternary ammonium salt type cationic surfactants, quaternary ammonium salt polymers and polyamines.

Examples of amines include higher alkylamine salts and amide type amine salts obtained from fatty acids and lower amines. Examples of quaternary ammonium salts include those obtained from higher alkylamines such as alkyltrimethylammonium salt and alkyldimethylbenzylammonium salt, and quaternary ammonium salts obtained from fatty acids and lower amines.

As examples of quaternary ammonium salt type polymers are mentioned polymers, or copolymers with other monomers, of quaternary ammonium salt-containing vinyl monomers represented by the following formulae (1) and (2):

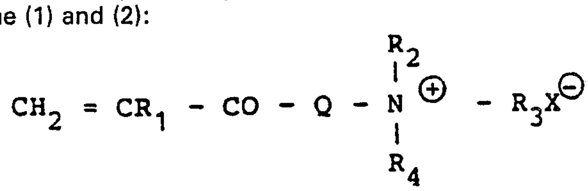 ..... (1)

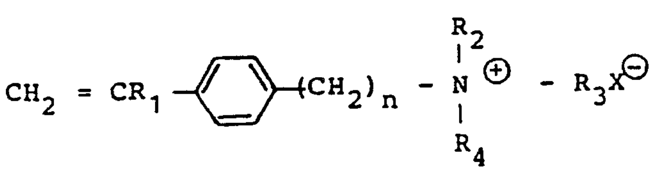 ... (2)

where

$R_1$: H or lower alkyl having 1 to 6 carbon atoms

$R_2$—$R_4$: lower alkyl having 1 to 6 carbon atoms

Q: divalent substituent group

$X^{\ominus}$: anion

n: integer of 0 to 2

As examples of polyamines are mentioned polyethyleneimines, products obtained by the reaction of polyfunctional amines of low molecular weight with polyfunctional compounds to amino group such as epihalohydrin, and polyamidepolyamines.

Effective cationic pretreating agents are polyamines and polyammonium salts. Water-soluble cationic compounds are preferred.

According to the method of the present invention, a fabric is pretreated with at least one of the materials exemplified above as the material (B).

The concentration of the pretreating agent is in the range of 0.1 to 30 wt.%, preferably 0.5 to 10 wt.%,

based on the weight of fabric although it differs depending on the fabric used and the degree of bleeding. As the application method, there may be adopted any of dipping, padding, coating, spray and ink jet methods. The fabric thus pretreated may be dry or wet.

The following description is now provided about coloring ink compositions used in the fabric treating method of the present invention where the treating solution is a coloring agent.

As ink compositions for attaining the foregoing prevention of bleeding are mentioned two kinds of compositions, one being of a water-insoluble dyestuff or pigment and the other of a water-soluble dyestuff. As a water-insoluble dyestuff or pigment composition is preferred an ink composition which contains a water-insoluble dyestuff or pigment, a dispersing agent having $—OSO_3M$ or $—SO_3M$ group as a hydrophilic group and three or more aromatic rings as hydrophobic groups for each said hydrophilic group, and a water-soluble or water-dispersible polymer which contains $—SO_3M$ group. It is preferable that a water-insoluble dyestuff or pigment be dispersed with a dispersing agent containing $—OSO_3M$ or $SO_3M$ to coagulate ink and then a water-soluble or water-dispersible polymer having $—SO_3M$ group be incorporated therein to enhance the coagulation of ink if necessary.

Even where the dispersion is made using a dispersing agent, e.g. a nonionic dispersing agent, other than the one used in the present invention, it is possible to prevent bleeding by adding the polymer used in the present invention. The content in ink of the $—SO_3M$ group-containing compound differs depending on the material to be treated, its structure, the kind and concentration of the pretreating agent, ink viscosity, etc., but that of the dispersing agent is 10 to 100% (based on dyestuff or pigment) and that of the water-soluble or water-dispersible polymer is 0 to 30 wt.% in ink.

In the ink composition used in the present invention, $—OSO_3M$ and $—SO_3M$ groups are contained in a water-insoluble dyestuff or pigment as dispersant and polymer, respectively, and these contain similar functional groups, thus ensuring very good compatibility and stability of the dispersant and the polymer. This is also one of the features of the present invention.

As examples of the water-insoluble dyestuff or pigment referred to herein are mentioned disperse dyestuffs, vat dyestuffs and pigments. Its concentration is usually in the range of 0.01 to 20 wt.%, and the average particle size of the water-insoluble dyestuff or pigment ink is not larger than 1 µm (1 µ), preferably not larter than 0.5 µm (0.5 µ). The smaller the particle size, the more improved the dyestuff absorbability or dispersion stability.

The typical ink compositions containing the water-insoluble dyestuff or pigment are as follows:

| Ink Composition | a | b | c |
|---|---|---|---|
| | wt.% | wt.% | wt.% |
| Dyestuff or pigment | 5-15 | 5-15 | 5-15 |
| Dispersant of the present invention 1) | 1.5-4.5 | 1.5-4.5 | - |
| Conventional dispersant | - | - | 1.5-4.5 |
| $SO_3M$ group-containing polymer of the present invention 2) | - | 2-5 | 4-10 |
| Anti-drying component 3) | 10-40 | 10-40 | 10-40 |
| Others | balance | balance | balance |

1) Tri-α-methyl-benzyl-phenol E O adduct-sulfates
2) Water-dispersible copolyester
3) Polyhydric alcohol such as ethylene glycol, propylene glycol

On the other hand, as a preferred example of a water-soluble dyestuff composition is mentioned an ink composition which contains a water-soluble dyestuff and a water-soluble or water-dispersible polymer containing $—SO_3M$ group. Water-soluble dyestuffs generally contain $—SO_3M$ group as a hydrophilic group, so the dyestuffs per se somewhat exhibit a coagulating action against fabrics pretreated with metallic salts or cationic substances. However, this phenomenon renders the dyestuffs per se insoluble, causes loss of ionic property of the functional groups required for exhaustion, thus resulting in decrease of

the bonding force thereof with hydrophilic fibers and a marked reduction of dyeing affinity.

To remedy such drawbacks, the present invention provides an ink composition containing a water-soluble dyestuff and a —$SO_3M$ group-containing polymer incorporated therein, the polymer being allowed to coagulate while suppressing the coagulation of the dyestuff to a great extent to prevent the deterioration of dyeability.

The amount of the water-soluble or water-dispersible polymer containing —$SO_3M$ group is in the range of 1 to 20 wt.%. If its amount is less than 1 wt.%, there will occur coagulation of the water-soluble dyestuff and reduction of the dyeing affinity will result. And if it exceeds 20 wt.%, the water soluble dyestuff will become less soluble. A preferable range is from 3 to 10 wt.%.

Particularly preferred water-soluble dyestuffs are reactive dyestuffs whose reacting groups with fiber are not —$SO_3M$. More particularly, in the case where an ink comprising a reactive dyestuff is applied to a fabric pretreated with the material (B), the functional groups which participate in the reaction and fixing do not undergo changes even the —$SO_3M$ group as a hydrophilic group somewhat replaces the pretreating agent, and so there will be little reduction of dyeability.

Examples of the water-soluble dyestuff referred to herein include anionic water-soluble dyestuffs such as acid dyestuffs, metal complexed acid dyestuffs, direct dyestuffs, reactive dyestuffs and complexed cationic dyestuffs with anionic compounds. The amount of the water-soluble dyestuff is preferably in the range of 0.5 to 25 wt.%.

Both the water-insoluble dyestuff or pigment and water-soluble dyestuff ink compositions consist principally of the foregoing ink composition components. In addition, they contain preferably 5 to 60 wt.% of a high boiling water-soluble solvent as an anti-drying component. Examples are polyhydric alcohols such as ethylene glycol, diethylene glycol, thiodiethylene glycol, triethylene glycol, butane diol, hexylene glycol, polyethylene glycol, glycerin and propylene glycol, polyhydric alcohol monoethers such as ethylene glycol monomethyl ether and diethylene glycol monoethyl ether, dimethylformamide and N-methyl-2-pyrrolidone.

In addition, the compositions may contain a physical property adjusting agent (adjustment of viscosity, surface tension, electric conductivity and pH), an antiseptic, a sterilizing agent, an oxygen absorber and a chelating agent.

The ink viscosity is very important in the ink jet dyeing process. The lower the ink viscosity, the more improved the injection characteristic. It is not higher than $3 \times 10^{-2}$ $Nsm^1$ (30 cP), preferably not higher than $1 \times 10^{-2}$ $Nsm^2$ (10 cP). As to the surface tension, a preferable range is from 0.04 to 0.06 $Nm^{-1}$ (40 to 60 dyne/cm).

After application of droplets to a substrate pretreated with the material (B), using the ink composition of the present invention, according to the ink jet or spray dyeing process, there is performed a conventional color developing (fixing) treatment using dry or wet heat. Subsequently, a soaping step may be added for the purpose of improving color fastness and touch.

Examples of the material to be treated in the invention preferably include knitted and woven fabrics and non-woven fabric.

According to present inventors' study, in the conventional ink jet process, ink is low in viscosity so diffuses into the fabric interior, giving a whitish and thin surface appearance of the fabric, while in the present invention, such internal diffusion is somewhat suppresssed, so the surface color density looks high and the colored portion becomes more uniform.

Thus, if an appropriate pretreatment is made using the ink composition in the method of the present invention, sharp patterns can be drawn on various knitted and woven fabrics including thin to thick fabrics without substantial deterioration of the injection characteristic in the ink jet process. And it becomes possible to print delicate patterns equal or even superior to conventional prints.

The present invention has been described mainly about ink jet dyeing, but it is to be understood that the present invention is applicable also to spray dyeing and to the case where various treating agents are used for other purposes than coloring.

The following examples are given to further illustrate the present invention, but the invention is not limited thereto.

### Example 1

Fabric (weave: Palace, weight: 80 $g/m^2$) comprising polyester fiber was pretreated (1) with the following metallic salts, and the fabric thus pretreated was subjected to ink jet dyeing (3) using disperse dyestuff ink compositions (2).

(1) Pretreatment

(a) Calcium chloride ($CaCl_2 \cdot 2H_2O$) 20, 50 g/l
(b) Barium chloride ($BaCl_2 \cdot 2H_2O$) 20, 50 g/l
Padding (wet pickup: 40%),
Drying (100°C × 5 minutes)

(2) Disperse Dyestuff Ink composition

The following two kinds of dispersing agents were added 50% (based on dyestuff) to 10% stock of CI

Disperse Red 92 as a disperse dyestuff and ion-exchanged water was added to make up to 100 $cm^3$ (cc). Then, 100 $cm^3$ (cc) glass beads (1 mm dia.) were added and then dispersed for 30 minutes by means of a sand grinder. Then, the dispersion was filtered with a 5 µm (5 µ) cut filter.

Dispersing Agent

(c) Anionic Type: formula (6)

$$\text{Tri-}\alpha\text{-methyl-benzyl-phenol-}(EO)_7SO_3NH(C_2H_4OH)_3$$

(d) Pluronic (Nonionic) Type

$$HO(C_2H_4O)_{140}-(C_3H_6O)_{54}-(C_2H_4O)_{140}H$$

Using this solution, inks of the following four compositions were prepared.

| Dyeing Solution | INK A | INK B | INK C | INK D |
|---|---|---|---|---|
| | parts | parts | parts | parts |
| Dispersing agent (c) | 50 | 50 | | |
| Dispersing agent (d) | | | 50 | 50 |
| Propylene glycol | 30 | 30 | 30 | 30 |
| Water-dispersible polyester resin (30%) * | | 20 | 20 | |
| Ion-exchanged water | 20 | | | 20 |
| Viscosity $10^{-3}$ $Nsm^2$ (cP) | 2.3 | 3.1 | 3.0 | 2.7 |

* The composition of the water-dispersible polyester resin is as follows:

| | |
|---|---|
| Isophthalic acid | 90 mol% |
| Sodium sulfoisophthalate | 10 mol% |
| Diethylene glycol | 100 mol% |
| Molecular weight: | about 10,000 |

The viscosity was measured at 35°C, 100 rpm, using an E type viscosimeter.

(3) Ink Jet Dyeing

| | | |
|---|---|---|
| Ink jet process | : | on demand type |
| Nozzle diameter | : | 60 µm (60 µ) |
| Nozzle-fabric distance | : | 1 mm |
| Applied voltage | : | 40V |
| Resolution | : | 8 dots/mm |

After application of ink by ink jet, a fixing treatment was performed for 10 minutes using superheated

steam (180°C), followed by reduction cleaning by a conventional method.

Dot diameters of the dyed products, observed through a microscope, and the color developability are as set out in Table 1 in terms of long diameters and L values, respectively.

The following INK A, B and C are ink composition of the present invention.

INK A: Dispersant . . . —$SO_3M$ group

INK B: Dispersant . . . —$SO_3M$ group

Water dispersibility . . . —$SO_3M$ group containing resin

INK C: Water dispersibility . . . —$SO_3M$ group containing resin

INK D does not contain the —$SO_3M$ group of the present invention. For the pretreatment in the present invention there were used calcium and barium chlorides.

From the results of Table 1 it is seen that the fabrics pretreated with the metallic salts using the ink compositions of the present invention are not larger than 300 µm (300 µ) in dot diameter and afforded very clear patterns, and that the color developability is remarkably improved because the ink coagulates on the fabric surface and is thereby prevented from permeating into the fabric.

Table 1

| Pretreatment of fabric | | Dot diameter µm (µ) INK A | INK B | INK C | INK D | * Color Value (L value) INK A | INK B | INK C | INK D |
|---|---|---|---|---|---|---|---|---|---|
| No pretreated | | 600 | 580 | 590 | 620 | 45.1 | 45.0 | 45.0 | 46.2 |
| Calcium chloride ($CaCl_2 \cdot 2H_2O$) | 20% | 280 | 260 | 270 | 580 | 37.4 | 37.2 | 37.3 | 44.0 |
| | 50% | 250 | 210 | 220 | 560 | 35.0 | 34.2 | 34.3 | 43.8 |
| Barium chloride ($BaCl_2 \cdot 2H_2O$) | 20% | 240 | 200 | 210 | 560 | 34.5 | 34.0 | 34.2 | 43.8 |
| | 50% | 200 | 180 | 200 | 540 | 33.9 | 33.5 | 34.1 | 43.0 |

(hatched cells: present invention)

present invention

* The lower L-value means deeper shade.

Example 2

In order to check whether the bleeding preventing method of the present invention is applicable to a wide variety of knittings and fabrics, polyester knittings and fabrics having different bleeding characteristics were treated in about the same manner as in Example 1.

(1) Pretreatment

(a) Calcium chloride ($CaCl_2 \cdot 2H_2O$) 20 g/l

(b) Barium chloride ($BaCl_2 \cdot 2H_2O$) 20 g/l

(2) Ink Composition

Treatment was made in the same way as in Example 1 except INK B used therein. Dot diameters are as set out in Table 2. From the results set forth in Table 2 it is seen that the products obtained using the ink compositions of the invention after pretreatment according to the method of the invention are reduced in dot diameter, about one third even in Taffeta and Tricot which exhibit the largest bleeding, and have sharp patterns.

Table 2

| Dot diameter / Type of fabric / Weight ($g/m^2$) / Pretreatment | Dot diameter µm (µ) | | | | Note |
|---|---|---|---|---|---|
| | Taffeta (FY) | Tropical (SF) | Broad (SF) | Tricot (FY·K) | |
| | 60 | 70 | 130 | 90 | |
| Not pretreated (blank) | 900 | 700 | 800 | 850 | Comparison |
| Pretreated $CaCl_2 \cdot 2H_2O$ | 300 | 260 | 280 | 290 | Present Invention |
| Pretreated $BaCl_2 \cdot 2H_2O$ | 270 | 240 | 250 | 270 | Present Invention |

FY : filament yarn fabric    SF : spun fabric

FY·K : filament yarn knitting

Example 3

Polyester 65/Cotton 35 blended fabric (weave: Broadcloth) comprising polyester fiber and cotton was padded with 20 g/l of barium chloride and then dried to obtain a pretreated fabric. Then, a dispersing treatment was performed in the same way as in Example 1 by adding 30% (based on pigment) of a compound of the dispersant formula (2) [distyrenized phenol $(EO)_{10}$-$SO_3NH_4$] to 10% CI Pigment 15:3. Then, the following ink composition was prepared:

| | |
|---|---|
| CI Pigment Blue 15:3 (10%) | 30 parts |
| Glycerin | 20 parts |
| Primal E—32 (acrylic emulsion, a product of Rohm & Haas Co.) | 20 parts |
| Ion-exchanged water | 10 parts |
| | 100 parts |

After ink application, a fixing treatment was performed by dry heat at 150°C for 3 minutes. Other treating conditions were the same as in Example 1. Dot diameter and color developability (L value) were measured as shown in Table 3.

Reference to the results of Table 3 it is seen that also in the use of pigment the treated product of the invention is small in dot diameter, prevented from bleeding and has a sharp pattern.

Table 3

| Pretreatment | Dot diameter μm (μ) | Color Value (L value) | Note |
|---|---|---|---|
| Not pretreated (blank) | 480 | 46.1 | Comparison |
| Pretreated ($BaCl_2 \cdot 2H_2O$) | 220 | 39.3 | Present Invention |

Example 4

Cotton 100% fabric (weave: Broadcloth) was pretreated with 50 g/l of calcium acetate by Pad·Dry method (w.p.u. 70%).

The following reactive dyestuff ink compositions of three primary colors were prepared:

| | |
|---|---|
| Reactive dyestuff* | 8 parts |
| Thiodiethylene glycol | 20 parts |
| Diethylene glycol | 10 parts |
| Water-dispersible polyester resin** | 20 parts |
| Ion-exchanged water | 42 parts |

* Yellow: CI Reactive Yellow 25

Red: CI Reactive Red 40

Blue: CI Reactive Blue 29

| ** | |
|---|---|
| Dimethylphthalic acid | 30 mol% |
| Isophthalic acid | 30 mol% |
| Sodium sulfoisophthalate | 40 mol% |
| Ethylene glycol | 100 mol% |

By way of comparison, there was prepared an ink composition not containing a water-dispersible polyester resin. After ink jet in the same way as in Example 1, a fixing treatment was performed under wet heat of 100°C for 30 minutes.

Flower patterns were printed using the above three primary color inks. The fabrics pretreated and printed using the water-dispersible polyester resin-containing inks of the invention had clear patterns of dark color. On the other hand, the fabric printed with ink not containing such water-dispersible polyester resin exhibited a large bleeding in blended color portions due to overlapping of dots, and thus was not practical.

Example 5

Crepe for Japanese dress comprising silk fabric was pretreated (1) with the following pretreating agent and then dyed by ink jet using an acid dyestuff ink (2).

(1) Pretreatment
Calcium chloride ($CaCl_2 \cdot 2H_2O$) 50 g/l

(2) Acid dyestuff ink composition

| | INK E | INK F |
|---|---|---|
| CI Acid Blue 62 | 2 parts | 2 parts |
| Glycerin | 20 parts | 20 parts |
| Thiodiethylene glycol | 5 parts | 5 parts |
| Water-dispersible polyester resin* (25% concentration) | 10 part | 40 parts |
| Ion-exchanged water | 63 parts | 33 parts |
| | 100 parts | 100 parts |

The viscosity of INK E and that of INK F were $6.5 \times 10^{-3}$ and $7.0 \times 10^{-3}$ $Nsm^2$ (6.5 and 7.0 cP), respectively.

* The composition of the water-dispersible polyester resin is as follows:

| | |
|---|---|
| Isophthalic acid | 50 mol% |
| Terephthalic acid | 25 mol% |
| Hexahydroisophthalic acid | 15 mol% |
| Sodium sulfoisophthalate | 10 mol% |
| Diethylene glycol | 100 mol% |

Molecular weight: about 7,000

Ink jet dyeing and fixing treatment were performed in the same manners as in Examples 1 and 4. Dot diameters were measured as shown in Table 4.

Also with the acid dyestuff, there were attained bleeding preventing effect and clear pattern like the use of the water-insoluble dyestuffs (Examples 1, 2 and 3).

Table 4

| Pretreatment of fabric | Dot diameter µm (µ) INK E | INK F | Note |
|---|---|---|---|
| Not pretreated (blank) | 850 | 850 | Comparison |
| Pretreated ($CaCl_2 \cdot 2H_2O$) | 300 | 200 | Present Invention |

**Claims**

1. A fabric treating method for applying a treating agent to selected areas of a fabric, the treating agent being applied in the form of a treating solution containing the treating agent and water, characterised in that the treating solution additionally contains at least one water-soluble or water-dispersible hydrophilic material (A) having a hydrophilic group represented by the formula $—OSO_3M$ or $—SO_3M$, M being a monovalent metal, ammonium or amine group, the fabric having been pretreated with a material (B) for coagulating the material (A).

2. A fabric treating method according to Claim 1, wherein material (A) is a polymer having a molecular weight of 2,000 to 100,000.

3. A fabric treating method according to Claim 2, wherein the polymer is a copolyester.

4. A fabric treating method according to Claim 1, wherein material (A) has a dispersing function and a molecular weight not smaller than 350 and smaller than 2,000.

5. A fabric treating method according to Claim 4, wherein material (A) has at least three aromatic rings per hydrophilic group.

6. A fabric treating method according to Claim 4, wherein material (A) is a compound represented by the following formula:

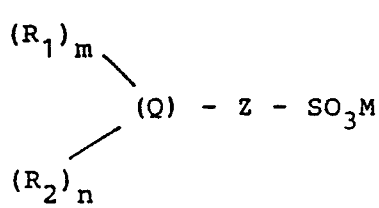

where Q, $R_1$, $R_2$, Z, M, m and n are defined as follows:

Q: at least one aromatic ring selected from benzene and naphthalene rings

$R_1$: aromatic ring-containing group
$R_2$: group other than an aromatic ring, such as lower alkyl, or halogen
Z: divalent alkylene ether or a derivative thereof
M: ammonium, amine or monovalent metal
m: integer of 2 to 5
n: integer of 0 to 3

7. A fabric treating method according to any preceding claim, wherein material (B) is at least one member selected from inorganic metallic salts, metallic salts of organic carboxylic acids, polyamines, amine salts and polyammonium salts.

8. A fabric treating method according to Claim 7, wherein the metal of the material (B) is at least one member selected from Ba, Ca and K.

9. A fabric treating method according to any preceding claim, wherein the treating agent is a coloring agent.

10. A fabric treating method according to Claim 9, wherein the coloring agent is a water-insoluble dyestuff or pigment.

11. A fabric treating method according to any preceding claim, wherein the treating solution is applied by the ink jet or spray method.

12. A fabric treating method according to any preceding claim, wherein the fabric is selected from woven, knitted and non-woven fabrics.

**Patentansprüche**

1. Verfahren zur Behandlung eines Gewebes durch Anwenden eines Behandlungsagens auf ausgewählte Flächen eines Gewebes, wobei das Behandlungsagens in Form einer Behandlungslösung angewandt wird, die das Behandlungsagens und Wasser enthält, dadurch gekennzeichnet, daß die Behandlungslösung zusätzlich wenigstens ein wasserlösliches oder wasserdispergierbares hydrophiles Material (A) enthält, mit einer hydrophilen Gruppe, die repräsentiert ist durch die Formel —$OSO_3M$ oder —$SO_3M$, wobei M ein monovalentes Metall, Ammonium oder eine Amingruppe bedeutet, und das Gewebe mit einem Material (B) zum Koagulieren des Materials (A) durchdrungen ist.

2. Verfahren zum Behandeln eines Gewebes nach Anspruch 1, wobei das Material (A) ein Polymer mit einem Molekulargewicht von 2 000 bis 100 000 ist.

3. Verfahren zum Behandeln eines Gewebes nach Anspruch 2, wobei das Polymer ein Copolyester ist.

4. Verfahren zum Behandeln eines Gewebes nach Anspruch 1, wobei das Material (A) eine dispergierende Funktion und ein Molekulargewicht nicht kleiner als 350 und kleiner als 2 000 hat.

5. Verfahren zum Behandeln eines Gewebes nach Anspruch 4, wobei das Material (A) wenigstens drei aromatische Ringe pro hydrophile Gruppe hat.

6. Verfahren zum Behandeln eines Gewebes nach Anspruch 4, wobei das Material (A) eine Verbindung, repräsentiert durch folgende Formel, ist:

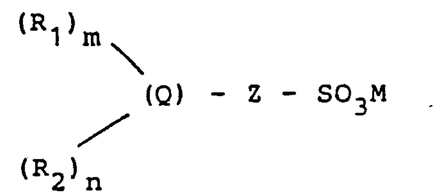

wobei Q, $R_1$, $R_2$, Z, M, m und n wie folgt definiert sind:
Q: wenigstens ein aromatischer Ring, ausgewählt aus Benzol und Naphthalinringen
$R_1$: eine einen aromatischen Ring enthaltende Gruppe
$R_2$: eine andere Gruppe als ein aromatischer Ring, wie Niederalkyl oder Halogen
Z: eine divalenter Alkylenether oder dessen Derivat
M: Ammonium, Amin oder monovalentes Metall
m: eine ganze Zahl von 2 bis 5
n: eine ganze Zahl von 0 bis 3.

7. Verfahren zum Behandeln eines Gewebes nach einem der vorhergehenden Ansprüche, wobei das Material (B) wenigstens ein Glied ist, ausgewählt aus anorganischen Metallsalzen, Metallsalzen organischer Carbonsäuren, Polyaminen, Aminsalzen und Polyammoniumsalzen.

8. Verfahren zum Behandeln eines Gewebes nach Anspruch 7, wobei das Metall des Materials (B) wenigstens ein Glied ist, ausgewählt aus Barium, Calcium und Kalium.

9. Verfahren zum Behandeln eines Gewebes nach einem der vorhergehenden Ansprüche, wobei das Behandlungsagens ein Färbemittel ist.

10. Verfahren zum Behandeln eines Gewebes nach Anspruch 9, wobei das Färbemittel ein wasserunlöslicher Farbstoff oder ein Pigment ist.

11. Verfahren zum Behandeln eines Gewebes nach einem der vorhergehenden Ansprüche, wobei die

Behandlungslösung durch ein Tintenstrahl- oder Sprühverfahren angewendet wird.

12. Verfahren zum Behandeln eines Gewebes nach einem der vorhergehenden Ansprüche, wobei das Gewebe ausgewählt ist aus gewebtem, gestricktem oder nicht-gewebtem Gewebe.

**Revendications**

1. Procédé de traitement d'un tissu pour appliquer un agent de traitement à des zones choisies d'un tissu, sachant que l'on applique l'agent de traitement sous forme d'une solution de traitement contenant l'agent de traitement et de l'eau, caractérisé en ce que la solution de traitement contient en outre au moins un produit (A) hydrophile soluble dans l'eau ou dispersable dans l'eau contenant un groupe hydrophile répondant à la formule $-OSO_3M$ ou $-SO_3M$, M représentant un métal monovalent, un groupe ammonium ou amine, sachant que l'on a prétraité le tissu avec un produit (B) permettant la coagulation du produit (A).

2. Procédé de traitement d'un tissu selon la revendication 1 dans lequel le produit (A) est un polymère présentant une masse molaire comprise entre 2 000 et 100 000.

3. Procédé de traitement d'un tissu selon la revendication 2, dans lequel le polymère est un copolyester.

4. Procédé de traitement d'un tissu selon la revendication 1 dans lequel le produit (A) présente un pouvoir de dispersion et une masse molaire qui n'est pas inférieure à 350 et inférieure à 2 000.

5. Procédé de traitement d'un tissu selon la revendication 4, dans lequel le produit (A) contient au moins trois cycles aromatiques par groupe hydrophile.

6. Procédé de traitement d'un tissu selon la revendication 4, dans lequel le produit (A) est un composé répondant à la formule générale:

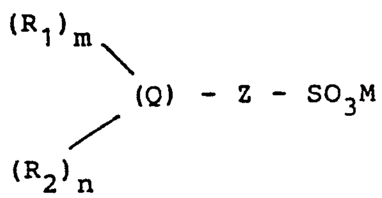

dans laquelle Q, $R_1$, $R_2$, Z, M, m et n sont définis de la manière suivante:

Q: au moins un cycle aromatique choisi parmi les cycles benzène et naphtalène
$R_1$: groupe contenant un cycle aromatique
$R_2$: groupe autre qu'un cycle aromatique, comme un groupe alkyle inférieur, ou halogène
Z: éther oxyde d'alkylène divalent ou un de ses dérivés
M: groupe amonium, amine ou métal monovalent
m: nombre entier compris entre 2 et 5
n: nombre entier compris entre 0 et 3

7. Procédé de traitement d'un tissu selon l'une quelconque des revendications précédentes, dans lequel le produit (B) est au moins un élément choisi parmi des sels métalliques inorganiques, des sels métalliques d'acides carboxyliques organiques, des polyamines, des sels d'amine et des polysels d'ammonium.

8. Procédé de traitement d'un tissu selon la revendication 7, dans lequel le métal du produit (B) est au moins un élément choisi parmi Ba, Ca et K.

9. Procédé de traitement d'un tissu selon l'une quelconque des revendications précédentes, dans lequel l'agent de traitement est un agent colorant.

10. Procédé de traitement d'un tissu selon la revendication 9, dans lequel l'agent colorant est un pigment ou un colorant insoluble dans l'eau.

11. Procédé de traitement d'un tissu selon l'une quelconque des revendications précédentes, dans lequel on applique la solution de traitement par le procédé de pulvérisation ou de jet d'encre.

12. Procédé de traitement d'un tissu selon l'une quelconque des revendications précédentes, dans lequel le tissu est choisi parmi des tissus tissés, tricotés et non-tissés.